(19) Europäisches Patentamt

European Patent Office

Office européen des brevets

(11) Veröffentlichungsnummer: **0 332 715 B1**

# (12) EUROPÄISCHE PATENTSCHRIFT

(45) Veröffentlichungstag der Patentschrift:
28.08.91 Patentblatt 91/35

(51) Int. Cl.$^5$: **B60R 21/00**

(21) Anmeldenummer: **88103663.6**

(22) Anmeldetag: **18.03.88**

(54) Aufprallsensor für ein Fahrzeug mit einer Prüfschaltung.

(43) Veröffentlichungstag der Anmeldung:
20.09.89 Patentblatt 89/38

(45) Bekanntmachung des Hinweises auf die
Patenterteilung:
28.08.91 Patentblatt 91/35

(84) Benannte Vertragsstaaten:
CH DE FR GB IT LI SE

(56) Entgegenhaltungen:
DE-A- 2 808 872
US-A- 3 851 305
ADVANCES IN INSTRUMENTATION, Band 27,
Teil 2, Oktober 1972, Seiten 620/1-9; M.H.
WOODWARD: "Automated vibration calibration data acquisition system"

(73) Patentinhaber: **Messerschmitt-Bölkow-Blohm
Gesellschaft mit beschränkter Haftung
Robert-Koch-Strasse
W-8012 Ottobrunn (DE)**

(72) Erfinder: **Spies, Hans
Schiessstätte 12
W-8068 Pfaffenhofen (DE)**
Erfinder: **Laucht, Horst, Dr.
Hermann-Löns-Weg 16
W-8206 Bruckmühl (DE)**
Erfinder: **Wöhrl, Alfons
Sebastian-Kneipp-Strasse 3
W-8898 Schrobenhausen (DE)**

## Beschreibung

Die Erfindung bezieht sich auf einen Aufprallsensor für ein Fahrzeug mit einer Prüfschaltung gemäß dem Oberbegriff des Patentanspruches 1.

Ein solcher Aufprallsensor ist aus der DE-A-2207831 bekannt. Der Aufprallsensor ist in einem Sensorgehäuse angeordnet und dient bei einem Aufprall des Fahrzeuges auf ein Hindernis zum Auslösen einer passiven Sicherheitseinrichtung, z.B. zum Aufblasen eines Luftkissens oder zum Strammziehen eines Sicherheitsgurtes. In dem Sensorgehäuse ist ein Beschleunigungsfühler, eine Auswerteschaltung für dessen elektrische Ausgangssignale, eine Auslöseschaltung zum Auslösen der passiven Sicherheitseinrichtung sowie eine Prüfschaltung zur Überprüfung der Funktionstüchtigkeit des Aufprallsensors enthalten. Mit der Prüfschaltung wird ein Impulszug erzeugt, wobei die Impulsamplituden so bemessen sind, daß in der Auswerte- und Auslöseschaltung vorgegebene Schwellwerte überprüft werden können. Die Prüfimpulse werden durch die gesamte Schaltung geführt und in der Prüfschaltung ausgewertet. Während der Überprüfung des Aufprallsensors auf Funktionstüchtigkeit ist die Auslöseschaltung von der passiven Sicherheitseinrichtung getrennt.

Bei dem bekannten Sensor ist der Beschleunigungsfühler ein piezoelektrischer Kristall, dessen Signale einfach oder doppelt integriert werden, je nachdem, ob als Auslösekriterium eine bestimmte kritische Geschwindigkeit oder ein bestimmter kritischer Weg gewählt wird. Die erwähnten Prüfimpulse werden dabei direkt den Elektroden des piezoelektrischen Kristalles zugeführt. Die Prüfschaltung wird zumindest vor Beginn einer Fahrt und bevorzugt auch in regelmäßigen Zeitabständen während der Fahrt eingeschaltet. Die Funktionstüchtigkeit kann z.B. optisch angezeigt werden. Zum Beispiel kann für eine bestimmte Zeit nach Einschalten während der Betätigung der Zündung des Fahrzeuges eine Leuchtdiode blinken, die erlischt, wenn der Sensor funktionstüchtig ist. Wird während einer Überprüfung Funktionsuntüchtigkeit festgestellt, so kann z.B.. Dauerblinken ausgelöst werden.

Mit der bekannten Prüfschaltung werden nur die elektrischen und elektronischen Komponenten des Aufprallsensors geprüft. Eine weitere Prüfung, z.B.. mechanischer Art ist nicht vorgesehen.

Der Erfindung liegt die Aufgabe zugrunde, die Prüfung des Aufprallsensors zu vereinfachen und auch eine einfache Anzeige der Funktionstüchtigkeit bzw. Funktionsuntüchtigkeit aufzuzeigen.

Diese Aufgabe ist gemäß der Erfindung durch die im kennzeichnenden Teil des Patentanspruches 1 angegebenen Merkmale gelöst.

Demgemäß ist in dem Sensorgehäuse ein elektroakustischer Wandler vorgesehen, der mit dem Beschleunigungsfühler akustisch und zwar vorzugsweise über das Sensorgehäuse gekoppelt ist. Die Prüfung der Auslöseschaltung kann als akustische Prüfung bezeichnet werden. Die angegebene akustische Prüfung hat mehrere Vorteile :

Vor Beginn einer Fahrt im Kraftfahrzeug wird der elektroakustische Wandler beim Einschalten der Zündung z.B. synchron mit der oben erwähnten Leuchtdiode intermittierend eingeschaltet. Die Schwingungen des elektroakustischen Wandlers werden entweder direkt oder über das Sensorgehäuse auf den piezoelektrischen Beschleunigungsfühler übertragen. Dieser gibt aufgrund der Schallsignale ein Signal ab, das durch die Auswerte- und Auslöseschaltung geleitet und dessen Verarbeitung mit der Prüfschaltung überprüft wird. Zusätzlich kann in der Prüfschaltung noch die Frequenzcharakteristik des von dem elektroakustischen Wandler abgestrahlten Signales überprüft werden. Aus einer solchen Überprüfung kann z.B. geschlossen werden, ob das Sensorgehäuse mechanisch fest mit der tragenden Struktur des Kraftfahrzeuges verbunden ist.

Der elektroakustische Wandler strahlt bevorzugt auch Schwingungen im hörbaren Bereich ab, so daß die Funktionsbereitschaft des Aufprallsensors neben der optischen Anzeige auch akustisch signalisiert wird. Bei Funktionsuntüchtigkeit des Aufprallsensors kann z.B. vorgesehen werden, den elektroakustischen Wandler eingeschaltet zu lassen, so daß der Fahrer des Fahrzeuges aufmerksam gemacht wird.Hat sich z.B. die Befestigung des Sensorgehäuses gelockert, so macht sich dieses ebenfalls akustisch durch Mitschwingen anderer Teile bemerkbar. Zur Verstärkung der akustischen Signale des elektroakustischen Wandlers kann z.B. eine Wand des Sensorgehäuses dienen, die in diesem Bereich als Schallmembran ausgebildet ist.

Die Signale des elektroakustischen Wandlers können als Übertragungssignale für eine weitere Anzeige, z.B. die erwähnte optische Anzeige dienen. Ein Teil der Signale des Wandlers liegt dann im Ultraschallbereich. Am Ende der Übertragungsstrecke müssen entsprechende Wandler, z.B. Schall/Lichtwandler vorgesehen werden. Mit einer derartigen Ausgestaltung werden elektrische Kabel eingespart.

Die beschriebene Funktionsüberprüfung und Funktionsanzeige des gesamten Aufprallsensors unter Verwendung eines elektroakustischen Wandlers und eine akustische Selbstprüfung des Aufprallsensors sind insbesondere dann vorteilhaft, wenn das Sensorgehäuse mit dem Beschleunigungsfühler, der Auswerte- und Auslöseschaltung sowie der Prüfschaltung direkt im Lenkrad des Fahrzeuges angeordnet sind.

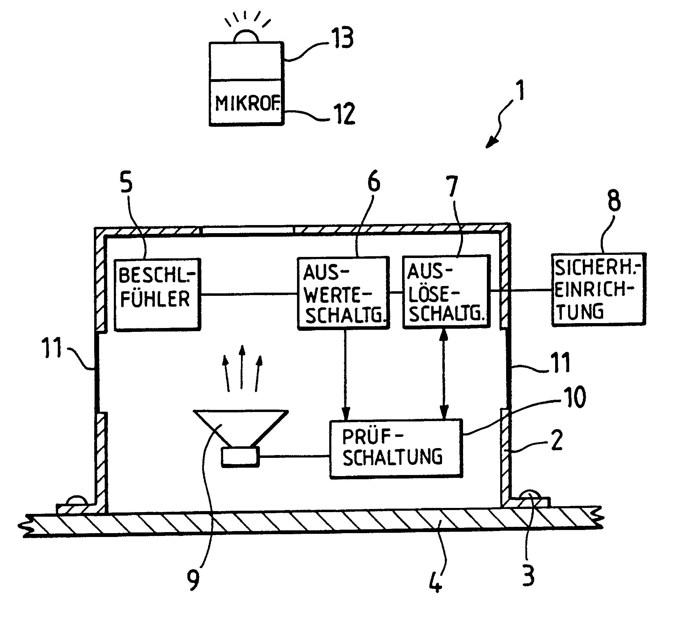

Weitere Ausgestaltungen der Erfindung gehen aus den Unteransprüchen hervor. Die Erfindung ist in einem Ausführungsbeispiel anhand der einzigen Figur näher erläutert, die schematisch den Aufbau eines Aufprallsensors gemäß der Erfindung darstellt.

Ein Aufprallsensor 1 ist in einem Sensorgehäuse 2 angeordnet, das über Befestigungsvorrichtungen 3 mit einem Teil 4 der Karosserie eines Fahrzeuges verbunden ist. In dem Sensorgehäuse 2 ist ein Beschleunigungsfühler 5, eine Auswerteschaltung 6 für die von dem Beschleunigungsfühler gelieferten elektrischen Signale sowie eine Auslöseschaltung 7 vorgesehen, die dann, wenn die ausgewerteten Signale einen kritischen Schwellenwert überschreiten, eine passive Sicherheitseinrichtung 8 auslöst. In dem Sensorgehäuse ist ferner noch ein elektroakustischer Wandler 9, der als piezomechanischer Wandler ausgebildet sein kann, und eine Prüfschaltung 10 vorgesehen. Die Wände des Sensorgehäuses sind in verschiedenen Bereichen als Schallmembranen 11 ausgebildet. Außerdem kann von dem elektroakustischen Wandler 9 noch ein außerhalb des Gehäuses liegendes Mikrofon 12 bestrahlt werden, dessen Ausgangssignale für die Aktivierung einer optischen Anzeige 13 verwendet werden.

Die Signale des elektroakustischen Wandlers 9 können entweder ebenfalls akustisch oder aber elektrisch zu der Prüfschaltung übertragen werden. Die Ausgangssignale der Auswerteschaltung 6 und der Auslöseschaltung werden der Prüfschaltung 10 zugeführt, die diese mit vorgegebenen Charakteristiken vergleicht. Während des Prüfvorganges wird die Auslöseschaltung 7 von der Sicherheitseinrichtung 8 getrennt.

## Patentansprüche

1. Aufprallsensor für ein Fahrzeug, der in einem Sensorgehäuse (2) angeordnet ist und bei einem Aufprall des Fahrzeuges auf ein Hindernis zum Auslösen einer passiven Sicherheitseinrichtung (8) dient, z.B. zum Aufblasen eines Luftkissens oder zum Strammziehen eines Sicherheitsgurtes, und der im Sensorgehäuse einen Beschleunigungsfühler (5), eine Auswerteschaltung (6) für dessen elektrische Ausgangssignale, eine Auslöseschaltung (7) zum Auslösen der passiven Sicherheitseinrichtung (8) bei einem Aufprall sowie eine Prüfschaltung (10) zur Überprüfung der Funktionstüchtigkeit des Aufprallsensors (1) aufweist, dadurch gekennzeichnet, daß im Sensorgehäuse (2) ein elektroakustischer Wandler (9) als Teil der Prüfschaltung (9, 10) vorgesehen ist, der mit dem Beschleunigungsfühler (5) akustisch gekoppelt ist.

2. Sensor nach Anspruch 1, dadurch gekennzeichnet, daß der elektroakustische Wandler (9) über das Sensorgehäuse (2) mit dem Beschleunigungsfühler (5) akustisch gekoppelt ist.

3. Sensor nach einem der vorhergehenden Ansprüche, dadurch gekennzeichnet, daß die Prüfschaltung (10) die von dem elektroakustischen Wandler (9) abgestrahlten Signale hinsichtlich ihrer Signatur mit den über den Beschleunigungsfühler (5) aufgenommenen Signalfrequenzen vergleicht.

4. Sensor nach Anspruch 1 oder 2, dadurch gekennzeichnet, daß der elektroakustische Wandler (9) auch Signale im hörbaren Bereich abstrahlt.

5. Sensor nach einem der vorhergehenden Ansprüche, dadurch gekennzeichnet, daß ein Teil des Sensorgehäuses (2) als Schallmembran (11) für den elektroakustischen Wandler (9) ausgebildet ist.

6. Sensor nach einem der vorhergehenden Ansprüche, dadurch gekennzeichnet, daß der elektroakustische Wandler (9) mit einer optischen Anzeige (13), vorzugsweise drahtlos gekoppelt ist.

7. Sensor nach einem der vorhergehenden Ansprüche, dadurch gekennzeichnet, daß bei Fehlfunktion der Auswerte- und Auslöseschaltung (6, 7) die Auslöseschaltung (7) von der passiven Sicherheitseinrichtung (8) getrennt bleibt.

8. Sensor nach einem der vorhergehenden Ansprüche, dadurch gekennzeichnet, daß die Prüfung des Aufprallsensors auch während eines Aufpralles des Kraftfahrzeuges auf ein Hindernis erfolgt.

## Claims

1. Impact sensor for a vehicle, which is arranged in a sensor housing (2) and, on impact of the vehicle with an obstacle, serves to trigger a passive safety device (8) for example for inflating an air cushion or for tightening a safety belt, and comprising in the sensor housing an acceleration sensor (5), an evaluation circuit (6) for its electrical output signals, a trigger circuit (7) for triggering the passive safety device on impact, and a test circuit (10) for testing the operational readiness of the impact sensor (1), characterised in that an electro-acoustic transducer (9) is provided in the sensor housing (2) as part of the test circuit (9, 10), which transducer is acoustically coupled to the acceleration sensor (5).

2. Sensor according to claim 1, characterised in that the electro-acoustic transducer (9) is acoustically coupled via the sensor housing (2) to the acceleration sensor (5).

3. Sensor according to one of the above claims, characterised in that the test circuit (10) compares the signals radiated by the electro-acoustic transducer (9), with respect to their signature, with the signal frequencies picked up via the acceleration sensor (5).

4. Sensor according to claim 1 or claim 2, characterised in that the electro-acoustic transducer (9) also emits signals in the audible range.

5. Sensor according to one of the above claims, characterised in that a portion of the sensor housing (2) is arranged to be an audio diaphragm (11) for the electro-acoustic transducer (9).

6. Sensor according to one of the above claims, characterised in that the electro-acoustic transducer (9) is coupled, preferably by radio to an optical indicator (13).

7. Sensor according to one of the above claims, characterised in that the trigger circuit (7) remains separated from the passive safety device (8) in the event of malfunction of the evaluation- and trigger circuit (6, 7).

8. Sensor according to one of the above claims, characterised in that the impact sensor is tested even during impact of the motor vehicle with an obstacle.


## Revendications

1. Détecteur de choc pour véhicule monté dans un boîtier de détecteur (2) et servant en cas de collision du véhicule avec un obstacle au déclenchement d'un dispositif de sécurité (8) passive, par exemple au gonflage d'un coussin à air ou à la tension d'une ceinture de sécurité, et comportant à l'intérieur du boîtier de détecteur un capteur d'accélération (5), un circuit d'exploitation (6) pour les signaux de sortie électriques dudit capteur, un circuit de déclenchement (7) pour le déclenchement du dispositif de sécurité (8) passive en cas de collision ainsi qu'un circuit de contrôle (10) pour le contrôle du bon fonctionnement du détecteur de choc (1), **caractérisé** en ce qu'il est prévu à l'intérieur du boîtier de détecteur (2) un convertisseur électro-acoustique (9) faisant partie du circuit de contrôle (9, 10), qui est couplé par voie acoustique au capteur d'accélération (5).

2. Détecteur selon la revendication 1, **caractérisé** en ce que le convertisseur électro-acoustique (9) est couplé sur le plan acoustique au capteur d'accélération (5) par l'intermédiaire du boîtier de détecteur (2).

3. Détecteur selon l'une des revendications précédentes, **caractérisé** en ce que le circuit de contrôle (10) compare les signaux émis par le convertisseur électroacoustique (9), en ce qui concerne leur signature, avec les fréquences de signal enregistrées par l'intermédiaire du capteur d'accélération (5).

4. Détecteur selon la revendication 1 ou 2, **caractérisé** en ce que le convertisseur électro-acoustique émet également des signaux dans le domaine audible.

5. Détecteur selon l'une des revendications précédentes, **caractérisé** en ce qu'une partie du boîtier de détecteur (2) est réalisée sous forme de membrane acoustique (11) pour le convertisseur électroacoustique (9).

6. Détecteur selon l'une des revendications précédentes, **caractérisé** en ce que le convertisseur électro-acoustique (9) est couplé à un dispositif d'affichage optique (13) de préférence sans câble de liaison.

7. Détecteur selon l'une des revendications précédentes, **caractérisé** en ce que le dispositif de déclenchement (7) reste isolé du dispositif de sécurité passive (8) en cas de défaut de fonctionnement des circuits d'exploitation et de déclenchement (6, 7).

8. Détecteur selon l'une des revendications précédentes, **caractérisé** en ce que le contrôle du détecteur de choc a lieu également lors d'une collision du véhicule avec un obstacle.

13

MIKROF. 12

1

5    6    7    8

BESCHL.-
FÜHLER

AUS-
WERTE-
SCHALTG.

AUS-
LÖSE-
SCHALTG.

SICHERH.-
EINRICH-
TUNG

11

11

10

PRÜF-
SCHALTUNG

2

9

4    3